# EUROPEAN PATENT APPLICATION

(11) **EP 3 075 783 A1**
(43) Date of publication of application: **05.10.2016**
(21) Application number: 16165306.8
(22) Date of filing: 30.06.2011
(51) Int. Cl.: C08L 63/00, H01B 3/40, C08J 5/24, C08L 35/06

(54) **CURABLE COMPOSITIONS**

(62) Divisional of application: 11868715.1
(71) Applicant: Blue Cube IP LLC, Midland MI 48674 (US)
(72) Inventor: Xiong, Jiawen, Shanghai, SG 201203 (CN); Chen, Hongyu, 201203 Zhangjiang (CN); Mullins, Michael J., Houston, TX Texas 77030 (US); Zhang, Chao, Shanghai (CN); Liao, Annie Guihong, Zhongguancun (CN); Zhang, Wayne Yi, 200041 Shanghai (CN)
(74) Representative: Bumke, Jakob Wenzel

(57) **Abstract**

A prepreg of a curable composition, comprising an epoxy resin and a hardener compound for curing with the epoxy resin, the hardener compound comprising a terpolymer having a first constitutional unit of the formula (I); a second constitutional unit of the formula (II); and a third constitutional unit of the formula (III); wherein each m, n and r is independently a real number that represents a mole fraction of the respective constitutional unit in the terpolymer, each R is independently a hydrogen, an aromatic group or an aliphatic group, Ar is an aromatic radical, where the curable composition does not have a cyanate group, where the epoxy group to the second constitutional unit has a molar ratio in a range of 1.0:1.0 to 2.7:1.0.

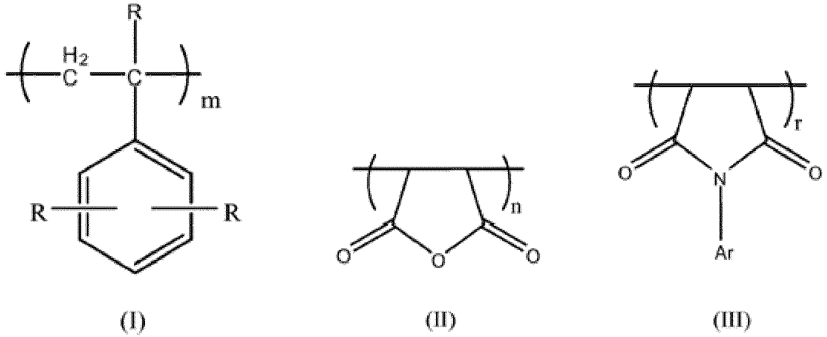

## Description

### Field of Disclosure

Embodiments of the present disclosure relate to curable compositions and in particular to curable compositions that include a terpolymer and a method of producing the curable compositions.

### Background

Curable compositions are compositions that include thermosettable monomers that can be crosslinked. Crosslinking, also referred to as curing, converts the curable compositions into crosslinked polymers (i.e., a cured product) useful in various fields such as, for example, in the field of composites, electrical laminates and coatings. Some properties of curable compositions and crosslinked polymers that can be considered for particular applications include mechanical properties, thermal properties, electrical properties, optical properties, processing properties, among other physical properties.

For example, glass transition temperature, dielectric constant and dissipation factor can be properties that are considered as highly relevant for curable compositions used for electrical laminates. For example, having a sufficiently high glass transition temperature for an electrical laminate can be very important in allowing the electrical laminate to be effectively used in high temperature environments. Similarly, decreasing the dielectric constant and dissipation factor of the electrical laminate can assist in separating a current carrying area from other areas.

To achieve desirable changes in glass transition temperature, dielectric constant and dissipation factor, previous approaches have added various materials to curable compositions. For example, materials have been added to the curable composition to decrease the dielectric constant and dissipation factor. While adding these materials to the curable composition may decrease the dielectric constant and dissipation factor, which is desirable, these materials can also adversely alter other properties such as decreasing the glass transition temperature, which is undesirable. Therefore, additional materials are added to increase the glass transition temperature. For example, previous approaches have added cyanates to increase the glass transition temperature. However, cyanates can be expensive and increase the cost of production for electrical laminates. Therefore, an affordable electrical laminate with desirable thermal properties and electrical properties would be beneficial.

### Summary

Embodiments of the present disclosure provide for hardener components that can be used in a curable epoxy system, as discussed herein. Specifically, embodiments of the present disclosure include a curable composition that includes an epoxy resin, and a hardener compound for curing with the epoxy resin, the hardener compound including a terpolymer having a first constitutional unit of the formula (I): 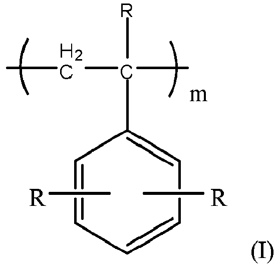 a second constitutional unit of the formula (II): 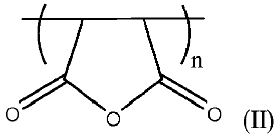 and a third constitutional unit of the formula (III): 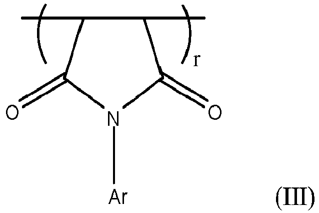 where each m, n and r is independently a real number that represents a mole fraction of the respective constitutional unit in the terpolymer, each R is independently a hydrogen, an aromatic group or an aliphatic group, Ar is an aromatic radical, and where the epoxy group to the second constitutional unit has a molar ratio in a range of 1.0:1.0 to 2.7:1.0.

For the various embodiments, the curable composition does not contain a cyanate group. For the various embodiments, a cured product of the curable composition has a glass transition temperature of at least 150 degrees Celsius (°C). For the various embodiments, the cured product of the curable composition has a dielectric constant (Dₖ) of 3.1 or less at a frequency of 1 gigahertz (GHz) and a dissipation factor (D_{f}) of 0.01 or less at a frequency of 1 GHz.

The embodiments of the present disclosure also include a prepreg that includes a reinforcement component and the curable composition, as described herein.

The embodiments of the present disclosure further include an electrical laminate structure that includes a reaction product of the curable composition, as described herein.

Additionally, embodiments of the present disclosure also include a method of preparing a curable composition that includes providing an epoxy resin, and reacting the epoxy resin with a hardener compound, the hardener compound including a terpolymer having a first constitutional unit of the formula (I): 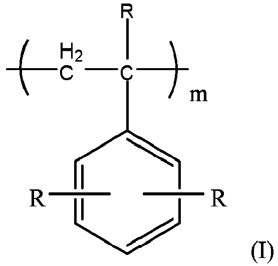 a second constitutional unit of the formula (II): 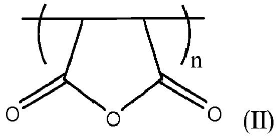 and a third constitutional unit of the formula (III): 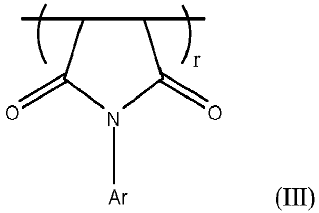 where each m, n and r is independently a real number that represents a mole fraction of the respective constitutional unit in the terpolymer, each R is independently a hydrogen, an aromatic group or an aliphatic group, Ar is an aromatic radical, and where the epoxy group to the second constitutional unit has a molar ratio in a range of 1.0:1.0 to 2.7:1.0.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Detailed Description

Embodiments of the present disclosure provide for curable compositions. For the various embodiments, the curable compositions of the present disclosure have a hardener component that includes a terpolymer. As discussed herein, the terpolymer is a styrene and maleic anhydride (SMA) copolymer that has been modified with an aromatic amine, such as aniline. The curable compositions of the present disclosure provide a cured product having desirable thermal properties and electrical properties. The desirable thermal properties can include glass transition temperature and degradation temperature, and the desirable electrical properties can include dielectric constant and dissipation factor. The cured products of the curable compositions of the present disclosure can be useful for electrical encapsulates, composites, electrical laminates, adhesives, prepregs and/or powder coatings.

Copolymers derived from styrene and maleic anhydrides have been used as hardeners for epoxy systems, including use in electronic applications (e.g. printed circuit boards) where the copolymer is employed as a matrix component. The styrene and maleic anhydride copolymers can provide a combination of acceptable properties that may include a low dielectric constant or a high glass transition temperature. The ratio of styrene to maleic anhydride can be adjusted to alter the properties of a cured product. In general, as the ratio of styrene to maleic anhydride increases the dielectric constant is reduced, which is desirable, but the glass transition temperature is concurrently reduced, which is undesirable.

As discussed herein, materials have been added to curable compositions to increase the glass transition temperature. For example, previous approaches have included cyanates in curable compositions that include copolymers derived from styrene and maleic anhydride to counteract the reduction in glass transition temperature. However, cyanates can be expensive and increase the cost of producing products formed from the curable compositions (e.g., electrical laminates).

Unlike previous approaches, however, the curable compositions of the present disclosure do not include a cyanate group but still provide a cured product having desirable thermal properties and electric properties. In other words, the curable compositions of the present disclosure can provide similar thermal and electrical properties to those including the cyanate group, but are less expensive because they do not include cyanates.

For the various embodiments, the styrene and maleic anhydride copolymer is modified to include an aromatic amine compound (e.g., aniline). The aromatic amine compound (e.g., aniline) can be used to react with part of the maleic anhydride groups in the styrene and maleic anhydride copolymer. The modified styrene and maleic anhydride copolymer (also referred to herein as the "terpolymer") can be incorporated into curable compositions to provide desirable thermal properties and electrical properties. For the various embodiments, the curable compositions of the present disclosure are formed such that the epoxy group to the second constitutional unit of the terpolymer has a molar ratio in a range of 1.0:1.0 to 2.7:1.0, preferably in a range of 1.1:1.0 to 1.9:1.0, and more preferably in a range of 1.3:1.0 to 1.7:1.0. As provided herein, forming the curable the molar composition having the molar ratio of the epoxy group to the second constitutional unit within the range of 1.0:1.0 to 2.7:1.0 provides the cured product having desirable thermal properties and electrical properties. As used herein, "constitutional units" refer to the smallest constitutional unit (a group of atoms comprising a part of the essential structure of a macromolecule), or monomer, the repetition of which constitutes a macromolecule, such as a polymer.

As used herein, "a," "an," "the," "at least one," and "one or more" are used interchangeably. The term "and/or" means one, one or more, or all of the listed items. The recitations of numerical ranges by endpoints include all numbers subsumed within that range (e.g., 1 to 5 includes 1, 1.5, 2, 2.75, 3, 3.80, 4, 5, etc.).

Additionally, the curable compositions of the present disclosure do not include cyanates and can still provide thermal properties and electrical properties similar to curable compositions including cyanates, but can be less expensive to manufacture.

For the various embodiments, the curable composition includes an epoxy resin, and a hardener compound for curing with the epoxy resin. For the various embodiments, the hardener compound includes a terpolymer having a first constitutional unit of the formula (I): 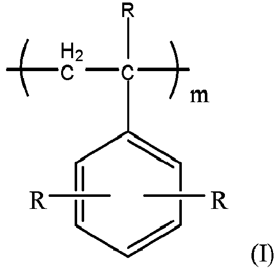 a second constitutional unit of the formula (II): 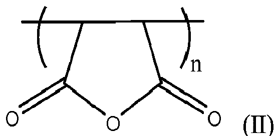 and a third constitutional unit of the formula (III): 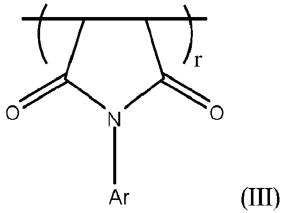 where each m, n and r is independently a real number that represents a mole fraction of the respective constitutional unit in the terpolymer, each R is independently a hydrogen, an aromatic group or an aliphatic group, Ar is an aromatic radical, and where the epoxy group to the second constitutional unit has a molar ratio in a range of 1.0:1.0 to 2.7:1.0. In various embodiments, each R is hydrogen and Ar is a phenyl group.

For various embodiments, the mole fraction m is 0.50 or greater and the mole fractions n and r are each independently 0.45 to 0.05, where (m + n + r) = 1.00. For various embodiments, the first constitutional unit to the second constitutional unit has a molar ratio in a range of 1:1 to 20:1; for example, the molar ratio of the first constitutional unit to the second constitutional unit can have a range of 3:1 to 15:1.

For various embodiments, the second constitutional unit constitutes 0.1 percent (%) to 41 % by weight of the terpolymer. In one embodiment, the second constitutional unit constitutes 5 % to 20 % by weight of the terpolymer. For various embodiments, the third constitutional unit constitutes 0.1 % to 62.69 % by weight of the terpolymer. In one embodiment, the third constitutional unit constitutes 0.5 % to 50 % by weight of the terpolymer.

For the various embodiments, examples of the aromatic group include, but are not limited to, phenyl, biphenyl, naphthyl, substituted phenyl or biphenyl, and naphthyl. Examples of the aliphatic group include, but are not limited to, alkyl and alicyclic alkyl. Examples of the aromatic radical include, but are not limited to, phenyl, biphenyl, naphthyl, substituted phenyl, substituted biphenyl, and substituted naphthyl.

For the various embodiments, the terpolymer includes three constitutional units. The terpolymer can be obtainable by combining a copolymer with a monomer via chemical reaction, for example, reacting a styrene and maleic anhydride copolymer with the amine compound. Additionally, the terpolymer can be obtainable by combining more than two species of monomer via chemical reaction (e.g., reacting a styrenic compound, maleic anhydride, and the maleimide compounds). The reacted monomers and/or copolymers form constitutional units of the terpolymer. A compound is a substance composed of atoms or ions of two or more elements in chemical combination.

Styrenic compound, as used herein, includes the compound styrene having the chemical formula C₆H₅CH=CH₂ and compounds derived therefrom (e.g. styrene derivatives), unless explicitly stated otherwise. Maleic anhydride, which may also be referred to as *cis*-butenedioic anhydride, toxilic anhydride, or dihydro-2,5-dioxofuran, has a chemical formula: C₂H₂(CO)₂O.

As discussed herein, styrene and maleic anhydride copolymers have been used in curable compositions. Commercial examples of such styrene and maleic anhydride copolymer include, but are not limited to, SMA® EF-40, SMA® EF-60 and SMA® EF-80 all of which are available from Sartomer Company, Inc., and SMA® EF-100, which is available from Elf Atochem, Inc.

For the various embodiments, styrene and maleic anhydride copolymers can be reacted with aromatic amine compounds such as aniline to form the terpolymer. For the various embodiments, the styrene and maleic anhydride copolymers have a styrene to maleic anhydride molar ratio of 1:1 to 8:1; for example; the copolymer can have a molar ratio of styrene to maleic anhydride of 3:1 to 6:1.

For various embodiments, the styrene and maleic anhydride copolymer can have a weight average molecular weight from 2,000 to 20,000; for example, the copolymer can have a weight average molecular weight from 3,000 to 11,500. The weight average molecular weigh can be determined by gel permeation chromatography (GPC).

For various embodiments, the styrene and maleic anhydride copolymer can have a molecular weight distribution from 1.1 to 6.1; for example, the copolymer can have a molecular weight distribution from 1.2 to 4.0.

For various embodiments, the styrene and maleic anhydride copolymer can have an acid number from 100 milligram potassium hydroxide per gram (mg KOH/g) to 480 mg KOH/g; for example, the copolymer can have an acid number from 120 mg KOH/g to 285 mg KOH/g, or from 156 mg KOH/g to 215 mg KOH/g.

For various embodiments, the styrene and maleic anhydride copolymers are modified with the aromatic amine compound. Specific examples of the aromatic amine compound include, but are not limited to, aniline, substituted aniline, naphthalene amine, substituted naphthalene amine, and combinations thereof Other aromatic amine compound are also possible.

As discussed herein, the terpolymers of the present disclosure are obtainable by modifying the styrene and maleic anhydride copolymer with the aromatic amine compound. The process for modifying the styrene and maleic anhydride copolymer can include imidization.

For one or more embodiments, the curable compositions include an epoxy compound. An epoxy compound is a compound in which an oxygen atom is directly attached to two adjacent or non-adjacent carbon atoms of a carbon chain or ring system. The epoxy compound can be selected from the group consisting of aromatic epoxy compounds, alicyclic epoxy compounds, aliphatic epoxy compounds, and combinations thereof.

For one or more embodiments, the curable compositions include an aromatic epoxy compound. Examples of aromatic epoxy compounds include, but are not limited to, glycidyl ether compounds of polyphenols, such as hydroquinone, resorcinol, bisphenol A, bisphenol F, 4,4'-dihydroxybiphenyl, phenol novolac, cresol novolac, trisphenol (tris-(4-hydroxyphenyl)methane), 1,1,2,2-tetra(4-hydroxyphenyl)ethane, tetrabromobisphenol A, 2,2-bis(4-hydroxyphenyl)-1,1,1,3,3,3-hexafluoropropane, 1,6-dihydroxynaphthalene, and combinations thereof.

For one or more embodiments, the curable compositions include an alicyclic epoxy compound. Examples of alicyclic epoxy compounds include, but are not limited to, polyglycidyl ethers of polyols having at least one alicyclic ring, or compounds including cyclohexene oxide or cyclopentene oxide obtained by epoxidizing compounds including a cyclohexene ring or cyclopentene ring with an oxidizer. Some particular examples include, but are not limited to, hydrogenated bisphenol A diglycidyl ether; 3,4-epoxycyclohexylmethyl-3,4-epoxycyclohexyl carboxylate; 3,4-epoxy-1-methylcyclohexyl-3,4-epoxy-1-methylhexane carboxylate; 6-methyl-3,4-epoxycyclohexylmethyl-6-methyl-3,4-epoxycyclohexane carboxylate; 3,4-epoxy-3-methylcyclohexylmethyl-3,4-epoxy-3-methylcyclohexane carboxylate; 3,4-epoxy-5-methylcyclohexylmethyl-3,4-epoxy-5-methylcyclohexane carboxylate; bis(3,4-epoxycyclohexylmethyl)adipate; methylene-bis(3,4-epoxycyclohexane); 2,2-bis(3,4-epoxycyclohexyl)propane; dicyclopentadiene diepoxide; ethylene-bis(3,4-epoxycyclohexane carboxylate); dioctyl epoxyhexahydrophthalate; di-2-ethylhexyl epoxyhexahydrophthalate; and combinations thereof.

For one or more embodiments, the curable compositions include an aliphatic epoxy compound. Examples of aliphatic epoxy compounds include, but are not limited to, polyglycidyl ethers of aliphatic polyols or alkylene-oxide adducts thereof, polyglycidyl esters of aliphatic long-chain polybasic acids, homopolymers synthesized by vinyl-polymerizing glycidyl acrylate or glycidyl methacrylate, and copolymers synthesized by vinyl-polymerizing glycidyl acrylate or glycidyl methacrylate and other vinyl monomers. Some particular examples include, but are not limited to glycidyl ethers of polyols, such as 1,4-butanediol diglycidyl ether; 1,6-hexanediol diglycidyl ether; a triglycidyl ether of glycerin; a triglycidyl ether of trimethylol propane; a tetraglycidyl ether of sorbitol; a hexaglycidyl ether of dipentaerythritol; a diglycidyl ether of polyethylene glycol; and a diglycidyl ether of polypropylene glycol; polyglycidyl ethers of polyether polyols obtained by adding one type, or two or more types, of alkylene oxide to aliphatic polyols such as propylene glycol, trimethylol propane, and glycerin; diglycidyl esters of aliphatic long-chain dibasic acids; and combinations thereof.

As discussed herein, using styrene and maleic anhydride copolymers with a high ratio of styrene to maleic anhydride (e.g., 4:1 or greater), reduces the dielectric constant, which is desirable, but the glass transition temperature is concurrently reduced, which is undersirable. However, the curable compositions of the present disclosure can incorporate styrene and maleic anhydride copolymers having a styrene to maleic anhydride ratio of 4:1 or greater without decreasing the glass transition temperature. For example, the styrene and maleic anhydride copolymer is modified with the amine compound and used in the curable composition such the curable compositions of the present disclosure have a molar ratio of the epoxy group to the second constitution unit within a range of 1.0:1.0 to 2.7:1.0. For various embodiments, the curable compositions of the present disclosure have a molar ratio of the epoxy group to the second constitution unit within a range of 1.1:1.0 to 1.9:1.0, and more preferably within a range of 1.3:1.0 to 1.7:1.0. As discussed here, the cured products of the curable compositions of the present disclosure exhibit desirable thermal properties and electrical properties without incorporating cyanates into the curable composition.

For various embodiments, the curable composition can include a solvent. The solvent can be selected from the group consisting of methyl ethyl ketone (MEK), toluene, xylene, N,N-dimethylformamide (DMF), propylene glycol methyl ether (PM), cyclohexanone, propylene glycol methyl ether acetate (DOWANOL^{™} PMA), and mixtures therefore. For various embodiments, the solvent can be used in an amount of from 30 % to 60 % by weight based on a total weight of the curable composition.

For various embodiments, the curable compositions can include a catalyst. Examples of the catalyst include, but are not limited to, 2-methyl imidazole (2MI), 2-phenyl imidazole (2PI), 2-ethyl-4-methyl imidazole (2E4MI), 1-benzyl-2-phenylimidazole (1B2PZ), boric acid, triphenylphosphine (TPP), tetraphenylphosphonium-tetraphenylborate (TPP-k) and combinations thereof. For the various embodiments, the catalyst (10 % solution by weight) can be used in an amount of from 0.01 % to 2.0 % by weight based on solid component weight in curable composition.

For various embodiments, the curable compositions can include a co-curing agent. The co-curing agents can be reactive to the epoxide groups of the epoxy compounds. The co-curing agent can be selected from the group consisting of novolacs, amines, anhydrides, carboxylic acids, phenols, thiols, and combinations thereof.
For the various embodiments, the co-curing agent can be used in an amount of from 1 % to 90 % by weight based on a weight of the terpolymer.

For one or more embodiments, the curable compositions include an additive. The additive can be selected from the group consisting of dyes, pigments, colorants, antioxidants, heat stabilizers, light stabilizers, plasticizers, lubricants, flow modifiers drip retardants, flame retardants, antiblocking agents, mold release agents, toughening agents, low-profile additives, stress-relief additives, and combination thereof. The additive can be employed in an effective amount for a particular application, as is understood by one having ordinary skill in the art. For different applications, the effective amount can have different values. As discussed here, the curable compositions of the present disclosure do not contain a cyanate group

For one or more embodiments, the curable composition can have a gel time of 200 seconds (s) to 400 s at 171 °C including all individual values and/or subranges therein; for example the curable compositions can have a gel time of 205 s to 395 s at 171 °C, or 210 s to 390 s at 171 °C.

Gel time can indicate a reactivity of the curable compositions (e.g. at a specific temperature) and can be expressed as the number of seconds to gel point. Gel point refers to the point of incipient polymer network formation wherein the structure is substantially ramified such that essentially each unit of the network is connected to each other unit of the network. When a curable composition reaches the gel point, the remaining solvent becomes entrapped within the substantially ramified structure. When the trapped solvent reaches its boiling point bubbles can be formed in the structure (e.g. the prepreg, resulting in an undesirable product).

As discussed herein, for one or more embodiments, the curable compositions have a gel time of 200 s to 400 s at 171 °C. In some instances curable compositions having a gel time that is greater than 400 s at 171 °C can be modified by adding a catalyst and/or an additive, as discussed herein, to adjust the gel time to 200 s to 400 s at 171 °C, 200 s to 375 s at 171 °C, or 200 s to 350 s at 171 °C. For some applications, curable compositions having a gel time of less than 200 s at 171 °C can be considered too reactive.

Embodiments of the present disclosure provide prepregs that includes a reinforcement component and the curable composition, as discussed herein. The prepreg can be obtained by a process that includes impregnating a matrix component into the reinforcement component. The matrix component surrounds and/or supports the reinforcement component. The disclosed curable compositions can be used for the matrix component. The matrix component and the reinforcement component of the prepreg provide a synergism. This synergism provides that the prepregs and/or products obtained by curing the prepregs have mechanical and/or physical properties that are unattainable with only the individual components.

The reinforcement component can be a fiber. Examples of fibers include, but are not limited to, glass, aramid, carbon, polyester, polyethylene, quartz, metal, ceramic, biomass, and combinations thereof. The fibers can be coated. An example of a fiber coating includes, but is not limited to, boron.

Examples of glass fibers include, but are not limited to, A-glass fibers, E-glass fibers, C-glass fibers, R-glass fibers, S-glass fibers, T-glass fibers, and combinations thereof. Aramids are organic polymers, examples of which include, but are not limited to, Kevlar®, Twaron®, and combinations thereof. Examples of carbon fibers include, but are not limited to, those fibers formed from polyacrylonitrile, pitch, rayon, cellulose, and combinations thereof. Examples of metal fibers include, but are not limited to, stainless steel, chromium, nickel, platinum, titanium, copper, aluminum, beryllium, tungsten, and combinations thereof. Examples of ceramic fibers include, but are not limited to, those fibers formed from aluminum oxide, silicon dioxide, zirconium dioxide, silicon nitride, silicon carbide, boron carbide, boron nitride, silicon boride, and combinations thereof. Examples of biomass fibers include, but are not limited to, those fibers formed from wood, non-wood, and combinations thereof.

The reinforcement component can be a fabric. The fabric can be formed from the fiber, as discussed herein. Examples of fabrics include, but are not limited to, stitched fabrics, woven fabrics, and combinations thereof. The fabric can be unidirectional, multiaxial, and combinations thereof. The reinforcement component can be a combination of the fiber and the fabric.

The prepreg is obtainable by impregnating the matrix component into the reinforcement component. Impregnating the matrix component into the reinforcement component may be accomplished by a variety of processes. The prepreg can be formed by contacting the reinforcement component and the matrix component via rolling, dipping, spraying, or other such procedures. After the prepreg reinforcement component has been contacted with the prepreg matrix component, the solvent can be removed via volatilization. While and/or after the solvent is volatilized the prepreg matrix component can be cured, e.g. partially cured. This volatilization of the solvent and/or the partial curing can be referred to as B-staging. The B-staged product can be referred to as the prepreg.

For some applications, B-staging can occur via an exposure to a temperature of 60 °C to 250 °C; for example B-staging can occur via an exposure to a temperature from 65 °C to 240 °C , or 70 °C to 230 °C. For some applications, B-staging can occur for a period of time of 1 minute (min) to 60 min; for example B-staging can occur for a period of time from, 2 min to 50 min, or 5 min to 40 mins. However, for some applications the B-staging can occur at another temperature and/or another period of time.

One or more of the prepregs may be cured (e.g. more fully cured) to obtain a cured product. The prepregs can be layered and/or formed into a shape before being cured further. For some applications (e.g. when an electrical laminate is being produced) layers of the prepreg can be alternated with layers of a conductive material. An example of the conductive material includes, but is not limited to, copper foil. The prepreg layers can then be exposed to conditions so that the matrix component becomes more fully cured.

One example of a process for obtaining the more fully cured product is pressing. One or more prepregs may be placed into a press where it subjected to a curing force for a predetermined curing time interval to obtain the more fully cured product. The press may have a curing temperature of 80 °C to 250 °C; for example the press may have a curing temperature of 85 °C to 240 °C, or 90 °C to 230 °C. For one or more embodiments, the press has a curing temperature that is ramped from a lower curing temperature to a higher curing temperature over a ramp time interval.

During the pressing, the one or more prepregs can be subjected to a curing force via the press. The curing force may have a value that is 10 kilopascals (kPa) to 350 kPa; for example the curing force may have a value that is 20 kPa to 300 kPa, or 30 kPa to 275 kPa. The predetermined curing time interval may have a value that is 5 s to 500 s; for example the predetermined curing time interval may have a value that is 25 s to 540 s, or 45 s to 520 s. For other processes for obtaining the cured product other curing temperatures, curing force values, and/or predetermined curing time intervals are possible. Additionally, the process may be repeated to further cure the prepreg and obtain the cured product.

For various embodiments, the cured products formed from the curable compositions of the present disclosure, as discussed herein, can have a glass transition temperature of at least 150 °C.

For various embodiments, the cured products formed from the curable compositions of the present disclosure, as discussed herein, can have a thermal degradation temperature of 300 °C to 500 °C; for example, the thermal degradation temperature can be 359 °C to 372 °C, or 363 °C to 368 °C.

For various embodiments, the cured products formed from the curable compositions of the present disclosure, as discussed herein, can have a dielectric constant of less than 3.1 at 1 GHz; for example, the dielectric constant at 1 GHz can be 2.92 to 3.02, or 2.91 to 2.89.

For various embodiments, the cured products formed from the curable compositions of the present disclosure, as discussed herein, can have a dissipation factor of less than 0.01 at 1 GHz; for example, the dissipation factor at 1 GHz can be 0.003 to 0.01, or 0.004 to 0.007.

### EXAMPLES

The following examples are given to illustrate, but not limit, the scope of this disclosure. The examples provide methods and specific embodiments of the curable compositions including the terpolymer of the present disclosure. As provided herein, the curable compositions can provide, among other things, desirable thermal properties and electric properties without incorporating a cyanate group.

### Materials

SMA® EF-40 (SMA 40), (styrenic compound -maleic anhydride copolymer), available from Sartomer Company, Inc. SMA 40 has a styrene to maleic anhydride molar ratio of 4:1, a weight average molecular weight of 10,500, a molecular weight distribution of 2.3, and an acid number of 215 mg KOH/mg.

SMA® EF-60, (styrenic compound -maleic anhydride copolymer), available from Sartomer Company, Inc. SMA 60 has a styrene to maleic anhydride molar ratio of 6:1, a weight average molecular weight of 11,500, a molecular weight distribution of 2.1, and an acid number of 156 mg KOH/mg.

SMA® EF-100, (styrenic compound maleic anhydride copolymer), available from Elf Atochem, Inc.

N,N-dimethylformamide (DMF) (solvent), available from Sinopharm Chemical Co.

Aniline (amine compound), (99.0% or greater purity) available from Sigma Aldrich.

Methanol (analytical grade), available from Sinopharm Chemical Co.

Acetic anhydride (analytical grade), available from Sigma Aldrich.

Sodium acetate (analytical grade), available from Sigma Aldrich.

Tetrahydofuran (curing agent) (THF) (HPLC), available from Sigma-Aldrich.

Maleic anhydride (97% purity), available from Sinopharm Chemical Co.

Cyclohexanone (solvent), (analytical grade), available from Sinopharm Chemical Co.

Methyl ethyl ketone (solvent), (analytical reagent), available from Sinopharm Chemical Co.

2-methyl imidazole (catalyst), (analytical grade), available from Sinopharm Chemical Co.

D.E.R. 560 (epoxy resin), available from the Dow Chemical Company.

DCPD EPICLONE HP 7200 L™ (HP7200) (epoxy resin), available from Dai Nippon Chemical.

Triethanolamine (TEA) (curing agent), available from the Dow Chemical Company.

### Modifying the Styrene-Maleic Anhydride Copolymer

To form the terpolymer of the present disclosure, styrene- maleic anhydride (SMA) copolymers were modified with aniline. The modified styrene and maleic anhydride (i.e., the terpolymer) is referred to as "AN-SMA." The styrene maleic anhydride copolymers SMA 40 and SMA 60 were used to form the terpolymer. In modifying the styrene-maleic anhydride copolymers, a different molar percentage (a theoretical ratio) of the maleic anhydride groups are reacted with aniline.

In the following, "SMA 40-60" indicates that SMA 40 was used as the styrene maleic anhydride copolymer and 60 molar percent of the maleic anhydride groups were reacted with aniline. Similarly, "AN-SMA 60-60" indicates that SMA 60 was used as the styrene maleic anhydride copolymer and 60 molar percent of the maleic anhydride groups were reacted. In other words, the first number of "AN-SMA 40-60" (i.e., "40") indicates which styrene-maleic anhydride copolymer was used and the second number of "AN-SMA 40-60" (i.e., "60") indicates the molar percentage of the maleic anhydride groups that were reacted with aniline.

The formulations of the terpolymer (i.e., the modified styrene-maleic anhydride copolymer) are summarized in Table I.

### Preparing AN-SMA 40-60

Add SMA 40 to a 250 ml three-necked flask equipped with a refluxing condenser, thermometer and nitrogen inlet. In order to keep a constant nitrogen pressure in the flask, nitrogen outlet is sealed with silicone oil through a U tube. Pour 125 milliliters (ml) of N, N-dimethylformamide (DMF) into the flask to dissolve the SMA 40. Add nitrogen to the flask to remove air for 5 min. Heat the solution of SMA 40 and DMF to 50 °C, and maintain. Add 1.65 grams (g) of Aniline to the solution after the SMA 40 is completely dissolved in the DMF. After 2 hours (hrs), increase the temperature from 50 °C to 100 °C. When the temperature reaches 100 °C, add 7.26 g of acetic anhydride and 1.50 g of sodium acetate to the flask. Remove the heat source to terminate the reaction 5 hrs after the acetic anhydride and sodium acetate were added by removing the heat source and allow the contents of the flask to naturally cool to approximately 20 °C. Precipitate the AN-SMA 40-60 product in methanol (the volume ratio of reactant solution to methanol is 1 to 10) by dropping reactant in excessive methanol under magnetic stirring. The final AN-SMA 40-60 product was collected after filtrating. Then, the polymer was put in fume hood for several hours to further remove methanol residual. Finally, the AN-SMA 40-60 terpolymer was dried for 12 hours at 120 °C in a vacuum oven.

### Preparing AN-SMA 40-100

Repeat the procedure in AN-SMA 40-60 with the following changes: use 2.75 g of aniline, 12.1 g acetic anhydride, and 2.5 g sodium acetate.

### Preparing AN-SMA 40-80

Repeat the procedure in AN-SMA 40-60 with the following changes: use 2.20 g of aniline, 9.68 g acetic anhydride, and 2.0 g sodium acetate.

### Preparing AN-SMA 40-40

Repeat the procedure in AN-SMA 40-60 with the following changes: use 1.10 g of aniline, 4.84 g acetic anhydride, and 1.0 g sodium acetate.

### Preparing AN-SMA 60-100

Repeat the procedure in AN-SMA 40-60 with the following changes: use SMA 60 instead of SMA 40, 1.93 g of aniline, 7.85 g acetic anhydride, and 1.70 g sodium acetate.

### Preparing AN-SMA 60-60

Repeat the procedure in An-SMA 40-60 with the following changes: use SMA 60 instead of SMA 40, 1.16 g of aniline, 4.71 g acetic anhydride, and 1.02 g sodium acetate.

### Preparing AN-SMA 60-40

Repeat the procedure in AN-SMA 40-60 with the following changes: use SMA 60 instead of SMA 40, 0.77 g of aniline, 3.14 g acetic anhydride, and 0368 g sodium acetate.

**Table I**

| | AN-SMA 40-100 | AN-SMA 40-80 | AN-SMA 40-60 | AN-SMA 40-40 | AN-SMA 60-100 | AN-SMA 60-60 | AN-SMA 60-40 |
|---|---|---|---|---|---|---|---|
| SMA 40 (g) | 15 | 15 | 15 | 15 | - | - | - |
| SMA 60 (g) | - | - | - | - | 15 | 15 | 15 |
| Aniline (g) | 2.75 | 2.2 | 1.65 | 1.1 | 1.93 | 1.16 | 0.77 |
| Dimethyl formamide (ml) | 125 | 125 | 125 | 125 | 125 | 125 | 125 |
| Acetic anhydride (g) | 12.1 | 9.68 | 7.26 | 4.84 | 7.85 | 4.71 | 3.14 |
| Sodium acetate (g) | 2.5 | 2.0 | 1.5 | 1.0 | 1.7 | 1.02 | 0.68 |

### Glass Transition Temperature

The glass transition temperature (T_{g}) of an unmodified SMA 40 copolymer, an unmodified SMA 60 copolymer, and the modified styrene and maleic anhydride polymers (i.e., the terpolymers) were determined.

The glass transition temperature for the modified and unmodified SMA 40 and SMA 60 polymers were determined by a differential scanning calorimeter (DSC) (TA Instruments Q2000). Samples, approximately 6.0 ~ 10.0 mg, of the modified and unmodified polymers were placed in the DSC with the following cycles. Cycle one: initial temperature: 20 °C, final temperature: 180 °C, and a ramp rate = 20 °C/min. Cycle two: initial temperature: 180 °C, final temperature: 20 °C, and a ramp rate = negative (-) 20 °C/min. Cycle three: initial temperature: 23 °C, final temperature: 200 °C, and a ramp rate = 10 °C/min. The glass transition temperature was determined through the inflexion point of DSC curves.

The glass transition temperatures of the unmodified and modified SMA 40 and SMA 60 polymers are illustrated in Table II

### Maleic Anhydride Content

The concentration of the constitutional units of the maleic anhydride for the modified and unmodified SMA 40 and SMA 60 polymers were determined using Fourier transform infrared spectroscopy (FTIR) (Nicolet 6700 FTIR spectrometer), the results of which are shown in Table II. Calibration curve samples were prepared by separately dissolving maleic anhydride in tetrahydrofuran that had been dried via molecular sieve. Test samples were prepared by placing portions of SMA 40, AN-SMA 40-100, AN-SMA 40-80, AN-SMA 40-60, AN-SMA 40-40, SMA 60, AN-SMA 60-100, AN-SMA 60-60, AND AN-SMA 60-40 into a 100 °C vacuum oven for 120 minutes, cooling the portions in a desiccator, and dissolving each of the cooled portions into a respective tetrahydrofuran portion. A Nicolet™ 6700 with liquid cell was used for calibration curve setup and unknown maleic anhydride concentration testing. The 1780 cm⁻¹ peak of the FTIR spectra was assigned to vibration of maleic anhydride carbonyl. The peak height is proportional to maleic anhydride concentration, and was used to establish the calibration curves. The calibration curves were used to determine the data shown in Table II.

**Table II**

| Unmodified SMA 40 and SMA 60 | | |
|---|---|---|
| Sample | MAH content (wt %) | T_{g} (°C) |
| SMA 40 | 19.1 | 112 |
| SMA 60 | 13.58 | 101 |

| Modified SMA 40 | | |
|---|---|---|
| Sample | MAH content (wt %) | T_{g} (°C) |
| AN-SMA 40-100 | 10 | 121 |
| AN-SMA 40-80 | 11 | 128 |
| AN-SMA 40-60 | 14 | 129 |
| AN-SMA 40-40 | 13 | 130 |

| Modified SMA 60 | | |
|---|---|---|
| Sample | MAH content (wt %) | T_{g} (°C) |
| AN-SMA 60-100 | 10 | 119 |
| AN-SMA 60-60 | 10 | 116 |
| AN-SMA 60-40 | 10 | 117 |

As seen from Table II, the modified styrene-maleic anhydride polymers show an increase in the glass transition temperature. For example, in comparing the T_{g} for the unmodified SMA 40 sample with the T_{g} of the modified SMA 40 samples, the modified SMA 40 samples show an increase in T_{g} of 7 °C to 18 °C. Additionally, comparing the T_{g} of the unmodified SMA 60 sample with the T_{g} of the modified SMA 60 samples, the modified SMA 60 samples show an increase in T_{g} of 16 °C to 18 °C.

### Examples 1- 4 and Comparative Examples A-B

Examples 1-4 are curable compositions including terpolymers (i.e., the modified styrene-maleic anhydride polymers). Comparative Examples A-B illustrate curable compositions including unmodified SMA 40 and unmodified SMA 60. The formulations of Examples 1-4 are shown in Table III and the formulations of Comparative Example A-B are shown in Table IV.

### Examples 1-4

Examples 1-4, curable compositions, were formed by separately dissolving a portion of each of the terpolymer (i.e., the modified styrene-maleic anhydride polymers) in a respective portion of methyl ethyl ketone and/or cyclohexanone, then adding D.E.R.™ 560 to each of the respective portions, and then adding 2-methyl imidazole that had been dissolved in methanol to form a 10 wt% solution to each of the respective portions. Examples 1-4 had a non-volatile organic wt % of 50%. Table III shows the compositions of Examples1-4.

### Comparative Examples A-B

Comparative Examples A-B were formed as Examples 1-4, except that unmodified SMA 40 and SMA 60 were used respectively for Comparative Examples A-B where Examples 1-2 use the modified SMA 40 and Examples 3-4 use the modified SMA 60. Table IV shows the compositions of Comparative Examples A-B.

**Table III**

| Formulation | Example 1 | Example 2 | Example 3 | Example 4 |
|---|---|---|---|---|
| D.E.R. 560 (g) | 10 | 10 | 10 | 10 |
| Terpolymer (Modified SMA) (g) | AN-SMA 40-100 (19.6 g) | AN-SMA 40-60 (14.0 g) | AN-SMA 60-60 (19.6 g) | AN-SMA 60-40 (19.6 g) |
| 2-MI (10% in methanol) (wt %) | 1.2 | 1.2 | 1.7 | 1.7 |
| MEK (g) | 19.7 | 16 | 14.8 | 14.8 |
| Cyclohexanone (g) | - | - | 14.8 | 14.8 |
| Molar Ratio of Epoxy to MAH | 1.1 : 1.0 | 1.1 : 1.0 | 1.1 : 1.0 | 1.1 : 1.0 |

**Table IV**

| Formulation | Comparative Example A | Comparative Example B |
|---|---|---|
| D.E.R. 560 (g) | 10 | 10 |
| Unmodified SMA (g) | SMA 40 (10.3 g) | SMA 60 (14.4 g) |
| 2-MI (10% in methanol) (wt %) | 0.50 | 0.77 |
| MEK (g) | 19.7 | 16 |
| Cyclohexanone (g) | - | - |
| Molar Ratio of Epoxy to MAH | 1.1 : 1.0 | 1.1 : 1.0 |

### Gel Time Test

Examples 1-4 and Comparative Examples A-B were evaluated for gelatin time via stroke cure on a 171 °C hot plate. The gel time results for Examples 1-4 are shown in Table V and the results for Comparative Examples A-B are shown in Table VI.

**Table V**

| Example | Catalyst content (wt. %, based on solid content) | Gel time (s) |
|---|---|---|
| Example 1 (D.E.R. 560/AN-SMA 40-100) | 1.2 | 259 |
| Example 2 (D.E.R. 560/AN-SMA 40-60) | 1.2 | 247 |
| Example 3 (D.E.R. 560/AN- SMA 60-60) | 1.7 | 280 |
| Example 4 (D.E.R. 560/AN-SMA 60-40) | 1.7 | 276 |

**Table VI**

| Comparative Example | Catalyst content (wt. %,based on solid content) | Gel time (s) |
|---|---|---|
| Comparative Example A (D.E.R. 560/SMA 40) | 0.50 | 242 |
| Comparative Example B (D.E.R. 560/SMA 60) | 0.77 | 247 |

The data in Table V shows that the curable compositions, Examples 1-4, have a gel time of 247 s to 280 at a temperature of 171 °C. The gel times of Examples 1-4 are slightly higher than the gel times of Comparative Examples A-B, which have gel times of 242 s and 247 s respectively, as shown in Table VI. Therefore, while the gel times of Examples1-4 are slightly higher than the Comparative Examples A-B, the gel times are still substantially below 400 s.

### Laminate Samples for Thermal Property Analysis

The curable compositions of Examples 1-4 and Comparative Examples A-B were brushed on E-glass fiber mat surface. The glass fiber mat was put in a 177 °C oven with good air flow for 180 s to obtain the prepregs. The pregregs were hot pressed at 200 °C between 1 to 4 hrs to get a laminate for thermal property analysis. The curing conditions, glass transition temperature, and degradation temperature for the Examples 1-4 and the Comparative Examples A-B are indicated in Tables VII and VIII, respectively

### Epoxy Plaque Samples for Electrical Property Analysis

The prepregs of Examples 1-4 and Comparative Examples A-B were crushed to a powder forming a prepreg powder, the prepreg powder was placed on a piece of flat aluminum foil, and then the aluminum foil with the prepreg powder was placed on a flat metal plate. The assembly was heated to 195 °C until the pregreg powder melted. The melted prepreg powder was covered with another aluminum foil and then a flat metal plate was placed on the aluminum foil. The assembly was hot pressed at 195 °C for 1 hr. An air bubble free epoxy plaque with a thickness of 0.3 millimeters (mm) was obtained. The dielectric constant and dissipation factor values for the Examples 1-4 and the Comparative Examples A-B are indicated in Tables VII and VIII, respectively.

### Thermal Property Analysis

**Glass Transition Temperature:** The glass transition temperatures for the laminate samples of Examples 1-4 and Comparative Examples A-B were determined. A RSA III dynamic mechanical thermal analyzer (DMTA) (TA Instruments) was used to determine glass transition temperatures for Examples 1-4 and Comparative Examples A-B, the results of which are shown in Table VII and Table VIII, respectively. The DMTA employed a frequency of 6.28 radian/s, an initial temperature of 30.0 °C, a final temperature of 350.0 °C, and a ramp rate of 3.0 °C/min.

**Degradation Temperature:** Thermal stability analysis was used to determine degradation temperatures for cured products for Examples 1-4 and Comparative Examples A-B, the results of which are shown in Table VII and Table VIII, respectively. The thermal stability analysis employed a Q5000 machine available from TA Instruments that utilized a heating rate of 20.0 °C/min. Degradation temperature was determined as the temperature at 5 % weight loss of material occurred.

### Electrical Property Analysis

**Dielectric Constant:** The dielectric constant of respective 0.3 millimeter (mm) thick samples of cured products of Examples 1-4 and Comparative Examples A-B was determined by ASTM D-150 employing an Agilent E4991 A RF impedance/material analyzer, the results of which are in Table VII and Table VIII respectively.

**Dissipation Factor:** The dissipation factor of respective 0.3 mm thick samples of cured products of Examples 1-4 and Comparative Examples A-B was determined by ASTM D-150 employing the Agilent analyzer, the results of which are in Table VII and Table VIII respectively.

**Table VII**

| Example | Curing Conditions of Laminate Sample | T_{g} (°C) | Td (°C) | Dₖ @ 1GHz | D_{f} @ 1GHz |
|---|---|---|---|---|---|
| Example 1 | 1 hr at 195 °C | 184 | 363 | 2.98 | 0.008 |
| Example 2 | 1 hr at 195 °C | 193 | 368 | 3.06 | 0.009 |
| Example 3 | 1 hr at 195 °C | 169 | 359 | 2.88 | 0.005 |
| Example 4 | 1 hr at 195 °C, then 2 hrs at 220 °C | 175 | 372 | 2.85 | 0.004 |
| Example 4 | 4 hrs at 195 °C | 172 | 362 | 2.83 | 0.005 |

**Table VIII**

| Comparative Example | Curing Conditions of Laminate Sample | T_{g} (°C) | Td (°C) | Dₖ @ 1GHz | D_{f} @ 1 GHz |
|---|---|---|---|---|---|
| Comparative Example A | 1 hr at 195 °C | 162 | 354 | 3.02 | 0.011 |
| Comparative Example B | 1 hr at 195 °C | 152 | 343 | 2.91 | 0.006 |

The data in Table VII shows that cured products of Examples 1-4 had a glass transition temperature of 169 °C to 193 °C. The data in Table VIII shows that Comparative Examples A-B had glass transition temperatures of 162 °C and 152 °C respectively. It can be seen that the curable compositions of 1-4 that incorporate the terpolymer of the present disclosure, increase the T_{g} as compared to curable compositions that do not incorporate the terpolymer.

The data in Table VII shows that Examples 1-4 had a degradation temperature of 362 °C to 372 °C. The data in Table VIII shows that Comparative Examples A-B had degradations temperatures of 354 °C and 343 °C respectively.

The data in Table VII shows that respective 0.3 mm thick samples of Examples 1-4 had a dielectric constant of 2.83 to 3.06 at 1 GHz. The data in Table VIII shows that Comparative Examples A-B had a dielectric constant of 2.91 and 3.02 at 1 GHz respectively.

The data in Table VII shows that respective 0.3 mm thick samples of Examples 1-4 had a dissipation factor of 0.004 to 0.009 at 1 GHz. The data in Table VIII shows that Comparative Examples A-B had a dissipation factor of 0.006.and 0.011 at 1 GHz, respectively.

To determine the effect of different curing temperatures, Example 4 was cured at two different curing conditions. As seen in Table VII, comparing the results between the two cured products using Example 4, it can be seen that different curing conditions can have a slight influence on the properties of the cured product.

**Laminate Properties:** Table IX illustrates the curing conditions, resin content, glass transition temperature, dielectric constant, dissipation factor, and peel strength of a laminate prepared from Example 3 and Comparative Example B. The peel strength is determined by WILA008.

**Table IX**

| Example/Comparative Example | Resin Content (wt%) | T_{g} (°C) | Dₖ @ 1GHz | D_{f} @ 1GHz | Peel Strength (pound/inch) |
|---|---|---|---|---|---|
| Example 3 | ~ 40 | 170 | 3.95 | 0.007 | 5.366 |
| Comparative Example B | ~37 | 150 | 4.00 | 0.008 | 4.257 |

The data in Table IX illustrates that the laminate prepared from Example 3 (including the modified SMA (AN-SMA 60-60)) has a glass transition temperature 20 °C higher than Comparative Example B (including the unmodified SMA 60). The dielectric constant and the dissipation factor of Example 3 illustrates a slight improvement over the Comparative Example B. Additionally, the peel strength of the laminate formed from Example 3 illustrates a 26.06 % improvement over the laminate prepared from the unmodified SMA 60.

### Examples 5-16: Effect of Changing the Molar Ration of the Epoxy Group to MAH

Examples 5-16 illustrate the effect of changing the molar ratio of the epoxy group to the maleic anhydride in forming the curable composition. For Examples 5-16 curable compositions were prepared by using AN-SMA 60-40 and DCPD-epoxy (HP7200).

Examples 5-16 are cured products formed from curable compositions including the terpolymer. Examples 5-16 were formed by separately dissolving a portion of the AN-SMA 60-40 terpolymer in a respective portion of MEK, then adding HP7200 to each of the respective portions, and then adding TEA. The formulations of Examples 5-16 are shown in Table X.

**Table X**

| Example | Molar Ratio of Epoxy to MAH | AN-SMA 60-40 (g) | DCPD-Epoxy (g) | TEA (g) |
|---|---|---|---|---|
| Example 5 | 0.9 : 1.0 | 2 | 0.476 | 0.025 |
| Example 6 | 1.0 : 1.0 | 2 | 0.529 | 0.025 |
| Example 7 | 1.1 : 1.0 | 2 | 0.582 | 0.020 |
| Example 8 | 1.3 : 1.0 | 2 | 0.688 | 0.035 |
| Example 9 | 1.5 : 1.0 | 2 | 0.793 | 0.020 |
| Example 10 | 1.7 : 1.0 | 2 | 0.899 | 0.040 |
| Example 11 | 1.9 : 1.0 | 2 | 1.005 | 0.040 |
| Example 12 | 2.1 : 1.0 | 2 | 1.111 | 0.040 |
| Example 13 | 2.3 : 1.0 | 2 | 1.217 | 0.040 |
| Example 14 | 2.5 : 1.0 | 2 | 1.323 | 0.040 |
| Example 15 | 2.7 : 1.0 | 2 | 1.428 | 0.040 |
| Example 16 | 2.9 : 1.0 | 2 | 1.534 | 0.040 |

### Glass Transition Temperature (T_{g})

The T_{g} of the cured resin for Examples 5-16 was measured with a DSC from TA Instruments (Q2000 V24.7) with flowing nitrogen. The software was "Universal Analysis V4.5A". A sample (6~10 mg) of each example was put in an aluminum pan, covered with a pan cover, and crimped. The sample was placed in the DSC Q2000 instrument. Three identical heat cycles were run. The initial temperature was set to 40 °C. The sample was heated from 40 to 250 °C with a 10 °C/min ramp rate. After the ramp the sample was held at 250 °C for 5 min, and then the sample was cooled to 40 °C with a -20 °C/min ramp rate. This was repeated two additional times. The T_{g} was determined by the DSC software for the transition on the third temperature cycle on the heating ramp. The results for Examples 5-16 are illustrated in Table XI.

### Dielectric Constant (Dₖ)/Dissipation Factor (D_{f})

The dielectric constant and dissipation factor for Examples 5-16 were determined using the methods described herein with regard to Examples 1-4. The results for Examples 5-16 are illustrated in Table XI.

### Maleic Anhydride Content

The maleic anhydride content of the cured products formed form the curable compositions of Examples 5-16 was determined by the method described herein with regard to Examples 1-4. The results for Examples 5-16 are illustrated in Table XI.

**Table XI**

| Example | Molar Ratio of Epoxy to Maleic Anhydride | T_{g} (°C) | Dₖ @ 1GHz | D_{f} @ 1GHz |
|---|---|---|---|---|
| Example 5 | 0.9 : 1.0 | 141 | - | - |
| Example 6 | 1.0 : 1.0 | 152 | 2.85 | 0.0038 |
| Example 7 | 1.1 : 1.0 | 160 | 2.92 | 0.0051 |
| Example 8 | 1.3 : 1.0 | 173 | 2.91 | 0.0047 |
| Example 9 | 1.5 : 1.0 | 174 | 2.91 | 0.0067 |
| Example 10 | 1.7 : 1.0 | 174 | 2.89 | 0.0078 |
| Example 11 | 1.9 : 1.0 | 173 | 2.98 | 0.0087 |
| Example 12 | 2.1 : 1.0 | 173 | 3.08 | 0.0100 |
| Example 13 | 2.3 : 1.0 | 161 | 3.02 | 0.0110 |
| Example 14 | 2.5 : 1.0 | 160 | 3.08 | 0.0130 |
| Example 15 | 2.7 : 1.0 | 152 | - | - |
| Example 16 | 2.9 : 1.0 | 140 | - | - |

The data in Table XI illustrates that the molar ratio of the epoxy group to the maleic anhydride has an affect on the glass transition temperature. For example, cured products of the curable composition having a molar ratio in the range of 1.0:1.0 to 2.7:1.0 have a glass transition temperature of greater than 150 °C. Additionally, cured products of the curable composition having a molar ratio in the range of 1.3:1.0 to 1.9:1.0.have a glass transition temperature of 173 °C. As seen in Table XII, once the molar ratio of epoxy to the maleic anhydride is outside the range of 1.0:1.0 to 2.7:1.0 the glass transition temperature, dielectric constant, and dissipation factor decrease to 140 °C and 141 °C.

### Comparative Modified Styrene Maleic Anhydride A (AN-SMA 1000)

A Comparative Modified Styrene Maleic Anhydride A (AN-SMA 1000) was prepared by modifying SMA 1000 with aniline. Add 202 g of SMA 1000 and 134 g of cyclohexanone into a reactor. Heat the contents to 100 °C and then add 46.5 g of aniline to the reactor while maintaining the resultant mixture at 97 °C to 103 °C. After completion of the addition of aniline, a reaction was effected at 100 °C for 4 hrs, and then, the reaction mixture was heated to 160 °C and reacted under reflux for 12 hours. The reaction mixture was cooled to 100 °C and 159 g of toluene was added thereto to obtain a solution comprising the terpolymer of styrene, maleic anhydride, and N-phenylmaleimide. The solid content of the solution was 48% by weight.

### Residual Aniline Analysis

The residual aniline and the maleic anhydride (MAH) content were determined for AN-SMA 60-40, as prepared herein, and Comparative Modified Styrene Maleic Anhydride A. The residual aniline was determined by Head Space (Instrument: Agilent G1888 Headspace Sampler / GCMS (Instrument: Agilent 6890N Gas Chromatography system with DB-VRX column). A sample (0.5 ±0.05 g) of the Comparative Modified Styrene Maleic Anhydride A-B was added to the Head Space (HS) sample vial and sealed for HS/GCMS analysis. Pure aniline was used as external standard. The aniline standard is prepared in DMF at around 0.1g/5mL. The aniline (10 micro liters (ul)) of the solution was injected in HS sample vial. The aniline concentration was calculated with one spot external calibration prepared as above. The maleic anhydride content was determined, as described herein. The results are shown in Table XII.

**Table XII**

| | MAH Content | Residual Aniline / % |
|---|---|---|
| AN-SMA 60-40 | 10% | 0.006 |
| Comparative Modified Styrene Maleic Anhydride A | 9% | 0.047 |

As seen in Table XII, the residual aniline in Comparative Modified Styrene Maleic Anhydride A (AN-SMA 1000) is much higher than AN-SMA 60-40.

### Comparative Examples C-F

Comparable Examples C-F are curable compositions that include a modified styrene and maleic anhydride copolymer, where the styrene and maleic anhydride copolymer is SMA 1000. The formulations of Comparable Examples C-F are shown in Table XIII.

### Comparative Example C

Comparative Example C is the data taken from Comparative Example 13 of US Patent 6,667,107.

### Comparative Example D

Use the resultant Comparative Modified Styrene Maleic Anhydride A (AN-SMA 1000), as discussed above. The procedure is as follows: mix the epoxy resin (100 parts by weight) and the AN-SMA 1000 (100 parts by weight). Add the catalyst (2-MI) to adjust the gel time to within a range of 200 s to 300 s.

### Comparative Example E

Add 15ml of the resultant comparative Modified Styrene Maleic Anhydride A (AN-SMA 1000) (48% solution in cyclohexanone and toluene) drop-wise to 150 ml methanol, and a white solid precipitated. After stirring for 10 min, the white solid was filtrated out and then was dried in vacuum oven at 100 °C for 6 hrs. The obtained white solid was solid AN-SMA 1000, which was then used to cure HP7200 using methyl ethyl ketone as solvent. The resulting molar ratio of epoxy to MAH of 5.8:1.0.

### Comparative Example F

Repeat Comparative Example E with the following changes: the resulting molar ratio of epoxy to MAH is 1.0:1.0.

**Table XIII**

| Comparative Example | Molar Ratio of Epoxy to MAH | AN-SMA 1000 | Epoxy (HP 7200) | Cyanate |
|---|---|---|---|---|
| Comparative Example C | 5.8 : 1.0 | 100 parts by weight | 100 parts by weight | - |
| Comparative Example D | 5.8 : 1.0 | 5 g | 5 g | - |
| Comparative Example E | 5.8 : 1.0 | 5 g | 5 g | - |
| Comparative Example F | 1.1 : 1.0 | 2.5 | 0.65 g | - |

### Laminate Samples for Thermal Property Analysis

The curable compositions of Comparable Examples D-F (Comparative Example C is the data taken from Comparative Example 13 of US Patent 6,667,107), were brushed on E-glass fiber mat surface. The glass fiber mat was put in a 177 °C oven with good air flow for 180 s to obtain the prepregs. The pregregs were hot pressed at 200 °C between 1 to 4 hrs to get a laminate for thermal property analysis. The glass transition temperatures for the Comparative Examples C-F are indicated in Table XIV.

### Epoxy Plaque Samples for Electrical Property Analysis

The prepregs of Comparative Examples D-F (Comparative Example C is the data taken from Comparative Example 13 of US Patent 6,667,107) were crushed to a powder forming a prepreg powder, the prepreg powder was placed on a piece of flat aluminum foil, and then the aluminum foil with the prepreg powder was placed on a flat metal plate. The assembly was heated to 195 °C until the pregreg powder melted. The melted prepreg powder was covered with another aluminum foil and then a flat metal plate was placed on the aluminum foil. The assembly was hot pressed at 195 °C for 1 hr. An air bubble free epoxy plaque with a thickness of 0.3 millimeters (mm) was obtained. The dielectric constant and dissipation factor values for the Comparative Examples C-F are indicated in Table XIV.

### Glass Transition Temperature (T_{g})

The T_{g} of the cured resins for Comparative Examples C-F were measured using the methods described herein with regard to Examples 5-16. The results for Comparative Examples C-F are illustrated in Table XIV.

### Dielectric Constant (Dₖ)/Dissipation Factor (D_{f})

The dielectric constant and dissipation factor for Comparative Examples C-F were determined using the methods described herein with regard to Examples 1-4. The results for Comparative Examples C-F are illustrated in Table XIV

### Maleic Anhydride Content

The maleic anhydride content of the cured products formed form the curable compositions of Comparative Examples C-F were determined by the method described herein with regard to Examples 1-4. The results for Comparative Examples C-F are illustrated in Table XIV

**Table XIV**

| Comparative Example | Molar Ratio of Epoxy to Maleic Anhydride | T_{g} (°C) | Dₖ @ 1GHz | D_{f} @ 1GHz |
|---|---|---|---|---|
| Comparative Example C | 5.8 : 1.0 | 130 | 3.30 | 0.0200 |
| Comparative Example D | 5.8 : 1.0 | 132 | 3.33 | 0.0380 |
| Comparative Example E | 5.8 : 1.0 | 138 | Clear Casting Failed | |
| Comparative Example F | 1.1 : 1.0 | 194 | Clear Casting Failed | |

The data in Table XIV for Comparative Example C - E illustrates that the comparative modified styrene maleic anhydride A (i.e., AN-SMA 1000) does not provide comparable glass transition temperatures to those in Examples 5-16. Comparative Example F illustrates that by changing the molar ratio of epoxy group to maleic anhydride, the T_{g} can increase significantly. Thus, an improper stoichiometric ratio of the epoxy to the hardener can decrease the glass transition temperature.

### Examples 17-18 and Comparative Examples G-H

Examples 17-18 illustrate the desired properties obtained by using the terpolymer, described herein, within a range of 1.0:1.0 to 2.7:1.0. Comparative Example G illustrates the effect of adding a cyanate group to the curable composition, and Comparative Example H illustrates the effect of not having a cyanate and including a terpolymer outside the range of 1.0:1.0 to 2.7:1.0.

### Examples 17-18

Examples 17-18 are cured products formed from curable compositions including the terpolymer. Examples 17-18 were formed by separately dissolving a portion of the AN-SMA 60-60 terpolymer in a respective portion of MEK, then adding DER.^{™}560 to each of the respective portions, and then adding 2-methyl imidazole that had been dissolved in methanol to form a 10 wt% solution to each of the respective portions. The formulations of Examples 17-18 are shown in table XV

### Comparative Examples G-H

Comparative Examples G-H were formed by separately dissolving a portion of the Comparative Modified Styrene-Maleic Anhydride polymer in a respective portion of Tetrahydofuran, then adding DCPD EPICLONE HP 7200 L™ and bisphenol A cyanate to each of the respective portions. The formulations of Comparable Examples G-H are shown in Table XV

**Table XV**

| | Example 17 | Example 18 | Comparative Example G | Comparative Example H |
|---|---|---|---|---|
| Molar Ratio of Epoxy to MAH | 1.10 : 1.0 | 2.20 : 1.0 | 1.88 : 1.0 | 3.77 : 1.0 |
| AN-SMA 60 | 151 parts | 100 parts | - | - |
| AN-SMA 1000 | - | - | 100 parts | 100 parts |
| DER.^{™} 560 | 100 parts | 103 parts | - | - |
| DCPD-Epoxy HP 7200 | - | - | 50 parts | 100 parts |
| Biphenol A cyanate | - | - | 200 parts | - |

### Glass Transition Temperature (T_{g})

The T_{g} of the cured resin for Examples 17-18 and Comparative Examples G-H were measured using the methods described herein with regard to Examples 1-4. The results for Examples 17-18 and Comparative Examples G-H are illustrated in Table XVI.

### Dielectric Constant (Dₖ)/Dissipation Factor (D_{f})

The dielectric constant and dissipation factor for Examples 17-18 and Comparative Examples G-H were determined using the methods described herein with regard to Examples 1-4. The results for Examples 17-18 and Comparative Examples G-H are illustrated in Table XVI

### Maleic Anhydride Content

The maleic anhydride content of the cured products formed from the curable compositions of Examples 17-18 and Comparative Examples G-H were determined by the method described herein with regard to Examples 1-4. The results for Examples 17-18 and Comparative Examples G-H are illustrated in Table XVI

**Table XVI**

| | Molar Ratio of Epoxy to Maleic Anhydride | T_{g} (°C) | Dₖ @ 1GHz | D_{f} @ 1GHz |
|---|---|---|---|---|
| Example 17 | 1.1:1.0 | 167 | 2.88 | 0.0037 |
| Example 18 | 2.2:1.0 | 152 | 3.07 | 0.0090 |
| Comparative Example G | 1.88:1 | 197 | 3.06 | 0.0083 |
| Comparative Example H | 3.77:1 | 143 | 3.07 | 0.0220 |

Examples 17-18 each have a molar ratio of epoxy to maleic anhydride that is within the range of 1.0:1.0 to 2.7:1.0. As seen in Table XVI, the glass transition temperature of Examples 17-18 are above 150 °C and do not include a cyanate.

Comparative Example G illustrates a cured product of a curable composition using the AN-SMA 1000 with a cyanate. The glass transition temperature for Comparative Example G is 197 °C, which indicates that the cyanate does increase the glass transition temperature of the cured product. Comparative Example H illustrates that a cured product of a curable composition using the AN-SMA 1000 without the cyanate and with an epoxy group to the second constitutional unit molar ratio of 3.77:1, which it outside the range of 1.0:1.0 to 2.7:1.0. As seen in Table XVI, the glass transition temperature of Comparative Example H is 143 °C, which is significantly less than the Comparative Example G including the cyanate and less than the glass transition temperature of Examples 17-18.

Some aspects and embodiments of the invention are set out in the following clauses:
1. A curable composition, comprising:
   an epoxy resin; and
   a hardener compound for curing with the epoxy resin, the hardener compound comprising:
      a terpolymer having a first constitutional unit of the formula (I): 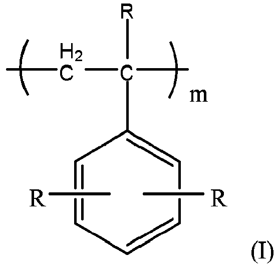 a second constitutional unit of the formula (II): 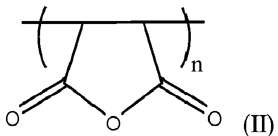 and a third constitutional unit of the formula (III): 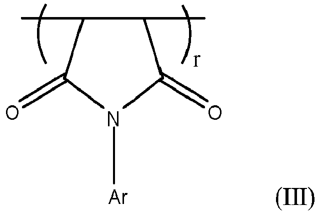 where each m, n and r is independently a real number that represents a mole fraction of the respective constitutional unit in the terpolymer, each R is independently a hydrogen, an aromatic group or an aliphatic group, Ar is an aromatic radical, and where the epoxy group to the second constitutional unit has a molar ratio in a range of 1.0:1.0 to 2.7:1.0.
2. The curable composition of clause 1, where the epoxy group to the second constitutional unit has a molar ratio in a range of 1.1:1.0 to 1.9:1.0.
3. The curable composition of any one of the preceding clauses, where the epoxy group to the second constitutional unit has a molar ratio in a range of 1.3:1.0 to 1.7:1.0.
4. The curable composition of any one of the preceding clauses , where the mole fraction m is 0.50 or greater and the mole fractions n and r are each independently 0.45 to 0.05, and where (m + n + r) = 1.00.
5. The curable composition of any one of the preceding clauses, where the curable composition does not contain a cyanate group.
6. The curable composition of any one of the preceding clauses, where a cured product of the curable composition has a glass transition temperature of at least 150 °C.
7. The curable composition of any one of the preceding clauses, where a cured product of the curable composition has a dielectric constant (Dₖ) of 3.1 or less at a frequency of 1 GHz.
8. The curable composition of any one of the preceding clauses , where a cured product of the curable composition has a dissipation factor (D_{f}) of 0.01 or less at a frequency of 1 GHz.
9. The curable composition of any one of the preceding clauses, where each R is independently a hydrogen, an aromatic group or an aliphatic group, and Ar is a group representing a monocyclic or a polycyclic aromatic or heteroaromatic ring.
10. The curable composition of any one of the preceding clauses , where the first constitutional unit to the second constitutional unit has a molar ratio in a range of 1:1 to 20:1.
11. The curable composition of any one of the preceding clauses , where the molar ratio of the first constitutional unit to the second constitutional unit is in a range of 3:1 to 15:1.
12. The curable composition of any one of the preceding clauses, where the second constitutional unit constitutes 0.1 percent (%) to 41 % by weight of the terpolymer.
13. The curable composition of any one of the preceding clauses, where the second constitutional unit constitutes 5 % to 20 % by weight of the terpolymer.
14. The curable composition of any one of the preceding clauses, where the third constitutional unit constitutes 0.1 % to 62.6 9% by weight of the terpolymer.
15. The curable composition of any one of the preceding clauses, where the third constitutional unit constitutes 0.5% to 50% by weight of the terpolymer.
16. The curable composition of any one of the preceding clauses, where the epoxy resin is selected from the group consisting of aromatic epoxy compounds, alicyclic epoxy compounds, aliphatic epoxy compounds, and combinations thereof.
17. A prepreg that includes a reinforcement component and the curable composition of any one of clauses 1-16.
18. An electrical laminate structure that includes a reaction product of the curable composition of any one of clauses 1-16.
19. A method of preparing a curable composition, comprising:
   providing an epoxy resin; and
   reacting the epoxy resin with a hardener compound, the hardener compound comprising:
      a terpolymer having a first constitutional unit of the formula (I): 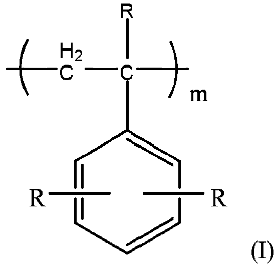 a second constitutional unit of the formula (II): 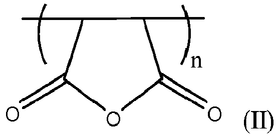 and a third constitutional unit of the formula (III): 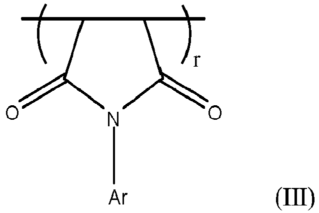 where each m, n and r is independently a real number that represents a mole fraction of the respective constitutional unit in the terpolymer, each R is independently a hydrogen, an aromatic group or an aliphatic group, Ar is an aromatic radical, and where the epoxy group to the second constitutional unit has a molar ratio in a range of 1.0:1.0 to 2.7:1.0.
20. The method of preparing a curable composition of clause 21, comprising excluding a cyanate group from the curable composition.

## Claims

1. A prepreg of a curable composition, comprising:
an epoxy resin; and
a hardener compound for curing with the epoxy resin, the hardener compound comprising:
a terpolymer having a first constitutional unit of the formula (I): 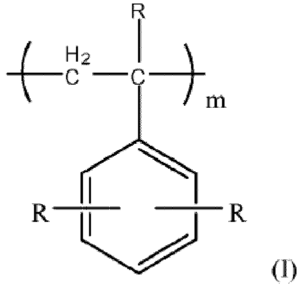 a second constitutional unit of the formula (II): 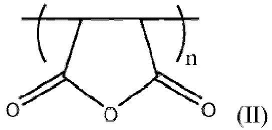 and a third constitutional unit of the formula (III): 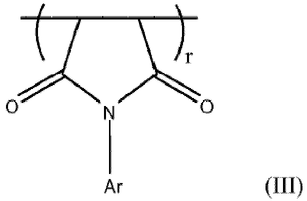 wherein each m, n and r is independently a real number that represents a mole fraction of the respective constitutional unit in the terpolymer, each R is independently a hydrogen, an aromatic group or an aliphatic group, Ar is an aromatic radical, where the curable composition does not have a cyanate group, where the epoxy group to the second constitutional unit has a molar ratio in a range of 1.0:1.0 to 2.7:1.0.

2. The prepreg of the curable composition of claim 1, wherein the curable composition has a mole fraction m of 0.50 or greater and the mole fractions n and r of each independently 0.45 to 0.05, and where (m + n + r) = 1.00.

3. The prepreg of the curable composition of claim 1, wherein the curable composition does not contain a cyanate group.

4. The prepreg of the curable composition of claim 1, wherein the molar ratio of the epoxy group to the second constitutional unit has a range of 1.1:1.0 to 1.9:1.0; and wherein the molar ratio of the first constitutional unit to the second constitutional unit has a range of 1:1 to 20:1.

5. The prepreg of the curable composition of claim 1, wherein the second constitutional unit constitutes 0.1 percent (%) to 41 % by weight of the terpolymer; and wherein the third constitutional unit constitutes 0.1 % to 62.6 9% by weight of the terpolymer.

6. The prepreg of the curable composition of claim 1, wherein each R is independently a hydrogen, an aromatic group, or an aliphatic group, and Ar is a group representing a monocyclic, polycyclic aromatic, or heteroaromatic ring.

7. The prepreg of claim 1, wherein the prepreg further comprises a reinforcement component.

8. The prepreg of claim 7, wherein the reinforcement component is a fiber or a fabric.

9. A cured product comprising:
an epoxy resin; and
a hardener compound for curing with the epoxy resin, the hardener compound
comprising:
a terpolymer having a first constitutional unit of the formula (I): 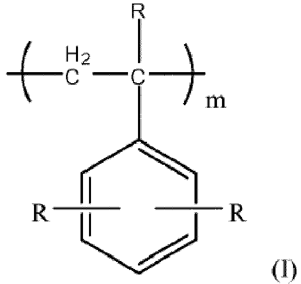 a second constitutional unit of the formal (II): 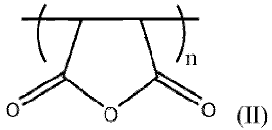 and a third constitutional unit of the formula (III): 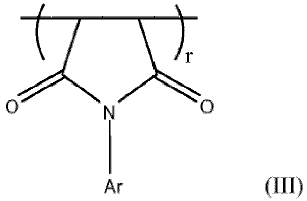 wherein each m, n and r is independently a real number that represents a mole fraction of the respective constitutional unit in the terpolymer, each R is independently a hydrogen, an aromatic group or an aliphatic group, Ar is an aromatic radical, where the curable composition does not have a cyanate group, where the epoxy group to the second constitutional unit has a molar ratio in a range of 1.0:1.0 to 2.7:1.0; and where the cured product has glass transition temperature of at least 150°C, a dielectric constant (Dₖ) of 3.1 or less at a frequency of 1 GHz, and a dissipation factor (D_{f}) of 0.01 or less at a frequency of 1 GHz.

10. The cured composition of claim 9, wherein the curable composition further comprises a reinforcement component.

11. The cured composition of claim 10, wherein the reinforcement component is a fiber or a fabric.

12. An electrical laminate structure wherein the electrical laminate structure comprises a prepreg of claim 1.

13. An electrical laminate structure wherein the electrical laminate structure comprises a cured composition of claim 9.

14. The electrical laminate structure of claim 12 wherein the electrical laminate structure comprises alternating layers of the prepreg of claim 1 and a conductive material.
